# EUROPÄISCHE PATENTSCHRIFT

(11) **EP 1 453 900 B1**
(45) Veröffentlichungstag und Bekanntmachung des Hinweises auf die Patenterteilung: **26.11.2008**
(21) Anmeldenummer: 02802979.1
(22) Anmeldetag: 16.10.2002
(51) Int. Cl.: C08K 3/30, F21V 8/00, G02B 1/04

(54) **LICHTLEITKÖRPER SOWIE VERFAHREN ZU DESSEN HERSTELLUNG**
LIGHT CONDUCTING BODY AND METHOD FOR THE PRODUCTION THEREOF
ELEMENT DE GUIDAGE DE LUMIERE ET PROCEDE DE FABRICATION ASSOCIE

(30) Priorität: 16.11.2001 DE 10156068
(43) Veröffentlichungstag der Anmeldung: 08.09.2004
(73) Patentinhaber: Evonik Röhm GmbH, 64293 Darmstadt (DE)
(72) Erfinder: SCHMIDT, Jann, 64291 Darmstadt (DE); ITTMANN, Günther, 64823 Gross-Umstadt 7 (DE); LICHTENSTEIN, Hans, 64354 Reinheim (DE); GROOTHUES, Herbert, 64331 Weiterstadt (DE)
(86) Internationale Anmeldenummer: PCT/EP2002/011547
(87) Internationale Veröffentlichungsnummer: WO 2003/042290

(56) Entgegenhaltungen:
- EP-A- 1 022 129
- EP-B- 0 573 051
- WO-A-97/01726
- US-A- 5 621 028

## Beschreibung

Die vorliegende Erfindung betrifft Lichtleitkörper, die mindestens eine Lichteinleitungsfläche und mindestens eine Lichtaustrittsfläche sowie eine 2 mm dicke, lichtleitende Schicht aufweisen, wobei das Verhältnis von Lichtaustrittsfläche zu Lichteinleitungsfläche mindestens 4 beträgt.

Derartige Lichtleitkörper sind an sich bekannt. So kann eine transparente Platte mit Einkerbungen versehen werden, an denen Licht normal zu Ausbreitungsrichtung ausgekoppelt wird. Derartige Lichtleitkörper sind Gegenstand von EP 800 036. Das Aufbringen von Einkerbungen ist jedoch aufwendig, so daß nach Alternativen gesucht wird.

Des weiteren sind aus EP 656 548 Lichtleitkörper bekannt, die Polymerpartikel als Streukörper verwenden. Problematisch an diesen Lichtleitkörpern ist deren Witterungsbeständigkeit. Insbesondere zersetzt eine intensive UV-Bestrahlung die Kunststoffpartikel, so daß UV-Bestrahlung zu einem Gelbstich führt. Dieser Gelbstich ist wiederum sehr kritisch für die Verwendung als Lichtleitkörper, da ein ungleichmäßiger Farbeindruck entsteht.

Darüber hinaus sind aus EP 1022129 Lichtleitkörper bekannt, die eine partikelfreie lichtleitende Schicht aus Polymethylmethacrylat aufweisen, auf die eine diffus ausgestattete Schicht aufgebracht ist. Die diffus ausgestattete Schicht, die eine Dicke im Bereich von 10 bis 1500 µm aufweist, umfaßt Bariumsulfat-Partikel. Gemäß diesem Prinzip wird das Licht über die PMMA-Schicht geleitet, wobei die Auskopplung durch die diffuse Schicht erfolgt. Allerdings kann die Lichtauskopplung kaum gesteuert werden, da nur das Licht normal zur Ausbreitungsrichtung gestreut wird, das die Grenzschicht zur diffus ausgestatteten Schicht durchdrungen hat. Es handelt sich hierbei dementsprechend nicht um eine Störung innerhalb der lichtleitenden Schicht, sondern um eine diffuse Rückreflexion. Darüber hinaus ist die Abnahme der Leuchtintensität sehr groß, wie dies die Beispiele belegen.

Hieraus ergibt sich eine geringe Leuchtdichte bei großer Entfernung zur Lichtquelle, die für viele Anwendungen nicht ausreicht. Die geringe Helligkeit bei größerem Abstand von der Lichtquelle des Lichtleitkörpers gemäß EP 1022129 führt des weiteren zu einer hohen Empfindlichkeit gegenüber der Bildung von Kratzern auf der Austrittsfläche des Lichts. Derartige Kratzer können sowohl durch Bewitterung als auch durch mechanische Einwirkung entstehen. Problematisch ist hierbei, daß diese Kratzer das Licht streuen. Auf diesem Prinzip beruht die Lehre von EP 800 036. Diese Störstellen treten bei einer hohen Lichtauskopplung nicht besonders hervor. Bei den geringen Helligkeiten werden diese jedoch als störend empfunden.
In Anbetracht des hierin angegebenen und diskutierten Standes der Technik war es mithin Aufgabe der vorliegenden Erfindung Lichtleitkörper anzugeben, die eine besondere Witterungsbeständigkeit aufweisen. Hierbei sollten die Lichtleitkörper eine auf die Bedürfnisse anpaßbare Lichtauskopplung ermöglichen, ohne daß Einkerbungen auf die Platte aufgebracht werden.

Darüber hinaus sollte die Leuchtdichte über die gesamte Fläche der Lichtaustrittsfläche möglichst konstant sein.

Eine weitere Aufgabe der Erfindung bestand darin, daß die Lichtleitkörper eine hohe Haltbarkeit, insbesondere eine hohe Beständigkeit gegen UV-Bestrahlung aufweisen.

Des weiteren lag der Erfindung die Aufgabe zugrunde, Lichtleitkörper zur Verfügung zu stellen, die besonders einfach hergestellt werden können. So sollten die Lichtleitkörper insbesondere durch Extrusion, Spritzguß sowie durch Gußverfahren erzeugt werden können.

Darüber hinaus war es mithin Aufgabe der vorliegenden Erfindung, Lichtleitkörper zu schaffen, die kostengünstig hergestellt werden können.

Eine weitere Aufgabe der vorliegenden Erfindung bestand darin, Lichtleitkörper anzugeben, die hervorragende mechanische Eigenschaften zeigen. Diese Eigenschaft ist insbesondere für Anwendungen wichtig, bei denen der Lichtleitkörper eine hohe Stabilität gegen Schlageinwirkung aufweisen soll.

Ein weiteres Ziel der vorliegenden Erfindung bestand darin, Lichtkörper bereitzustellen, die auf einfache Weise in Größe und Form den Anforderungen angepaßt werden können.

Gelöst werden diese Aufgaben sowie weitere, die zwar nicht wörtlich genannt werden, sich aber aus den hierin diskutierten Zusammenhängen wie selbstverständlich ableiten lassen oder sich aus diesen zwangsläufig ergeben, durch die in Anspruch 1 beschriebenen Lichtleitkörper. Zweckmäßige Abwandlungen der erfindungsgemäßen Lichtleitkörper werden in den auf Anspruch 1 rückbezogenen Unteransprüchen unter Schutz gestellt.

Hinsichtlich Verfahren zur Herstellung liefern die Ansprüche 11 und 12 eine Lösung der zugrunde liegenden Aufgabe.

Dadurch, daß die lichtleitende Schicht eines Lichtleitkörpers, mindestens 60 Gew.-%, bezogen auf das Gewicht der lichtleitenden Schicht, Polymethylmethacrylat und 0,001 bis 0,08 Gew.-%, bezogen auf das Gewicht der lichtleitenden Schicht, sphärische Bariumsulfat-Partikel mit einem mittleren Durchmesser im Bereich von 0,3 bis 20 µm umfaßt, wobei der mindestens eine lichtleitende Schicht einer Dicke von mindestens 2mm umfassende Lichtleitkörper mindestens eine Lichteinleitungsfläche und mindestens eine Lichtaustrittsfläche aufweist, wobei das Verhältnis von Lichtaustrittsfläche zu Lichteinleitungsfläche mindestens 4 beträgt, gelingt es Lichtleitkörper zur Verfügung zu stellen, die eine besonders hohe Beständigkeit gegen Witterungseinflüsse aufweisen.

Durch die erfindungsgemäßen Maßnahmen werden u.a. insbesondere folgende Vorteile erzielt:
- Die Lichtleitkörper der vorliegenden Erfindung lassen sich besonders einfach herstellen. So können die Lichtleitkörper durch Extrusion, Spritzguß sowie durch Gußverfahren hergestellt werden.
- Die erfindungsgemäßen Lichtleitkörper zeigen eine hohe Beständigkeit gegen UV-Bestrahlung.
- Des weiteren zeigen erfindungsgemäße Lichtleitkörper eine besonders gleichmäßige Verteilung der Leuchtdichte. Hierbei können verschieden große Lichtleitkörper hergestellt werden, ohne daß die Leuchtdichtenverteilung in besonderem Maß kritisch wäre.
- Darüber hinaus zeigen die Lichtleitkörper der vorliegenden Erfindung ein besonders farbechtes Licht, so daß mit zunehmendem Abstand von der Lichtquelle kein Gelbeindruck entsteht.
- Die Helligkeit der Lichtleitkörper kann an die Bedürfnisse angepaßt werden.
- Die Lichtleitkörper der vorliegenden Erfindung weisen gute mechanische Eigenschaften auf.

Die lichtleitende Schicht des Lichtleitkörpers gemäß der vorliegenden Erfindung weist 0,001 bis 0,08, vorzugsweise 0,001 bis 0,06 und besonders bevorzugt 0,001 bis 0,04 Gew.-%, bezogen auf das Gewicht der lichtleitenden Schicht, sphärische Bariumsulfat-Partikel auf.

Der Begriff sphärisch bezeichnet im Rahmen der vorliegenden Erfindung, daß die Partikel vorzugsweise eine kugelförmige Gestalt aufweisen, wobei dem Fachmann offensichtlich ist, daß aufgrund der Herstellungsmethoden auch Partikel mit anderer Gestalt enthalten sein können, oder daß die Form der Partikel von der idealen Kugelgestalt abweichen kann.

Dementsprechend bedeutet der Begriff sphärisch, daß das Verhältnis von der größten Ausdehnung der Partikel zur geringsten Ausdehnung maximal 4, vorzugsweise maximal 2 beträgt, wobei diese Ausdehnungen jeweils durch den Schwerpunkt der Partikel gemessen werden. Vorzugsweise sind mindestens 70%, besonders bevorzugt mindestens 90%, bezogen auf die Zahl der Partikel, sphärisch.

Die Bariumsulfat-Partikel haben einen mittleren Durchmesser (Gewichtsmittel) im Bereich von 0,3 bis 20 µm, bevorzugt von 0,7 bis 6µm, insbesondere im Bereich von 1,4 bis 3,5 µm. Günstigerweise liegen 75 % der Partikel im Bereich von 0,3 bis 6 µm. Die Ermittlung der Teilchengröße erfolgt mittels eines Röntgensedigraphen. Hierbei wird das Absetzverhalten des Bariumsulfat im Schwerefeld mittels Röntgenstrahlen verfolgt. Anhand der Transparenz für Röntgenstrahlen wird auf die Teilchengröße geschlossen (Das Prinzip der Absorption von Röntgenstrahlen wird benutzt, um direkt die Veränderungen in der Massen-Konzentration zu bestimmen, wenn Partikel in einer Flüssigkeit gemäss dem Stokes'schen Gesetz sedimentieren).

Bariumsulfat-Partikel, die die oben genannten Eigenschaften aufweisen sind an sich bekannt und kommerziell unter anderem von Sachtleben Chemie GmbH, D-47184 Duisburg erhältlich. Darüber hinaus sind diverse Methoden zur Herstellung bekannt.
Gemäß einem besonderen Aspekt der vorliegenden Erfindung liegen diese Teilchen gleichmäßig verteilt in der Kunststoffmatrix vor, ohne daß eine nennenswerte Aggregation oder Zusammenlagerung der Bariumsulfat-Partikel auftritt. Gleichmäßig verteilt bedeutet, daß die Konzentration an Bariumsulfat innerhalb der Kunststoffmatrix im wesentlichen konstant ist.
Zur Gewährleistung dieser Verteilung der Partikel in der Kunststoffmatrix sind dem Fachmann, je nach Art der Herstellung des Kunststoffkörpers, verschiedene Methoden bekannt. Wird die lichtleitende Schicht nach dem Gußverfahren hergestellt, so können beispielsweise Mittel zugesetzt werden, die ein Absetzen des Bariumsulfats verhindern, und so eine feine Verteilung gewährleisten. Wird die lichtleitende Schicht aus thermoplastisch formbarem Polymethylmethacrylat hergestellt, so können der Formmassen bekannte Dispergierhilfsmittel beigefügt werden.
Erfindungsgemäß umfaßt die lichtleitende Schicht mindestens 60 Gew.-%, bezogen auf das Gewicht der lichtleitenden Schicht, Polymethylmethacrylat.
Diese Polymere werden im allgemeinen durch radikalische Polymerisation von Mischungen erhalten, die Methylmethacrylat enthalten. Im allgemeinen enthalten diese Mischungen mindestens 40 Gew.-%, vorzugsweise mindestens 60 Gew.-% und besonders bevorzugt mindestens 80 Gew.-%, bezogen auf das Gewicht der Monomere, Methylmethacrylat.

Daneben können diese Mischungen weitere (Meth)acrylate enthalten, die mit Methylmethacrylat copolymerisierbar sind. Der Ausdruck (Meth)acrylate umfaßt Methacrylate und Acrylate sowie Mischungen aus beiden. Diese Monomere sind weithin bekannt. Zu diesen gehören unter anderem (Meth)acrylate, die sich von gesättigten Alkoholen ableiten, wie beispielsweise Methylacrylat, Ethyl(meth)acrylat, Propyl(meth)acrylat, n-Butyl(meth)acrylat, tert.-Butyl(meth)acrylat, Pentyl(meth)acrylat und 2-Ethylhexyl(meth)acrylat; (Meth)acrylate, die sich von ungesättigten Alkoholen ableiten, wie z. B. Oleyl(meth)acrylat, 2-Propinyl(meth)acrylat, Allyl(meth)acrylat, Vinyl(meth)acrylat; Aryl(meth)acrylate, wie Benzyl(meth)acrylat oder Phenyl(meth)acrylat, wobei die Arylreste jeweils unsubstituiert oder bis zu vierfach substituiert sein können;
Cycloalkyl(meth)acrylate, wie
3-Vinylcyclohexyl(meth)acrylat, Bornyl(meth)acrylat;
Hydroxylalkyl(meth)acrylate, wie
3-Hydroxypropyl(meth)acrylat,
3,4-Dihydroxybutyl(meth)acrylat,
2-Hydroxyethyl(meth)acrylat,
2-Hydroxypropyl(meth)acrylat;
Glycoldi(meth)acrylate, wie 1,4-Butandiol(meth)acrylat, (Meth)acrylate von Etheralkoholen, wie
Tetrahydrofurfuryl (meth) acrylat,
Vinyloxyethoxyethyl(meth)acrylat;
Amide und Nitrile der (Meth)acrylsäure, wie
N-(3-Dimethylaminopropyl) (meth) acrylamid,
N-(Diethylphosphono) (meth) acrylamid,
1-Methacryloylamido-2-methyl-2-propanol;
schwefelhaltige Methacrylate, wie
Ethylsulfinylethyl(meth)acrylat,
4-Thiocyanatobutyl(meth)acrylat,
Ethylsulfonylethyl(meth)acrylat,
Thiocyanatomethyl(meth)acrylat,
Methylsulfinylmethyl(meth)acrylat,
Bis((meth)acryloyloxyethyl)sulfid;
mehrwertige (Meth)acrylate, wie
Trimethyloylpropantri(meth)acrylat.

Neben den zuvor dargelegten (Meth)acrylaten können die zu polymerisierenden Zusammensetzungen auch weitere ungesättigte Monomere aufweisen, die mit Methylmethacrylat und den zuvor genannten (Meth)acrylaten copolymerisierbar sind.
Hierzu gehören unter anderem 1-Alkene, wie Hexen-1, Hepten-1; verzweigte Alkene, wie beispielsweise Vinylcyclohexan, 3,3-Dimethyl-1-propen, 3-Methyl-1-diisobutylen, 4-Methylpenten-1;
Acrylnitril; Vinylester, wie Vinylacetat;
Styrol, substituierte Styrole mit einem Alkylsubstituenten in der Seitenkette, wie z. B. α -Methylstyrol und α-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole;
Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;
Vinyl- und Isoprenylether;
Maleinsäurederivate, wie beispielsweise Maleinsäureanhydrid, Methylmaleinsäureanhydrid, Maleinimid, Methylmaleinimid; und
Diene, wie beispielsweise Divinylbenzol.
Im allgemeinen werden diese Comonomere in einer Menge von 0 bis 60 Gew.-%, vorzugsweise 0 bis 40 Gew.-% und besonders bevorzugt 0 bis 20 Gew.-%, bezogen auf das Gewicht der Monomeren, eingesetzt, wobei die Verbindungen einzeln oder als Mischung verwendet werden können.
Die Polymerisation wird im allgemeinen mit bekannten Radikalinitiatoren gestartet. Zu den bevorzugten Initiatoren gehören unter anderem die in der Fachwelt weithin bekannten Azoinitiatoren, wie AIBN und 1,1-Azobiscyclohexancarbonitril, sowie Peroxyverbindungen, wie Methylethylketonperoxid, Acetylacetonperoxid, Dilaurylperoxyd, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat,
Mischungen von zwei oder mehr der vorgenannten Verbindungen miteinander sowie Mischungen der vorgenannten Verbindungen mit nicht genannten Verbindungen, die ebenfalls Radikale bilden können. Diese Verbindungen werden häufig in einer Menge von 0,01 bis 10 Gew.-%, vorzugsweise von 0,5 bis 3 Gew.-%, bezogen auf das Gewicht der Monomeren, eingesetzt. Hierbei können verschiedene Poly(meth)acrylate eingesetzt werden, die sich beispielsweise im Molekulargewicht oder in der Monomerzusammensetzung unterscheiden.
Des weiteren können die Formmassen weitere Polymere enthalten, um die Eigenschaften zu modifizieren. Hierzu gehören unter anderem Polyacrylnitrile, Polystyrole, Polyether, Polyester, Polycarbonate und Polyvinylchloride. Diese Polymere können einzeln oder als Mischung eingesetzt werden, wobei auch Copolymere, die von den zuvor genannten Polymere ableitbar sind, den Formmassen beigefügt werden können.
Derartig besonders bevorzugte Formmassen sind unter dem Handelsnamen PLEXIGLAS® von der Fa. Röhm GmbH kommerziell erhältlich.

Das Gewichtsmittel des Molekulargewichts M_{w} der erfindungsgemäß als Matrixpolymere zu verwendenden Homo- und/oder Copolymere kann in weiten Bereichen schwanken, wobei das Molekulargewicht üblicherweise auf den Anwendungszweck und die Verarbeitungsweise der Formmasse abgestimmt wird. Im allgemeinen liegt es aber im Bereich zwischen 20 000 und 1 000 000 g/mol, vorzugsweise 50 000 bis 500 000 g/mol und besonders bevorzugt 80 000 bis 300 000 g/mol, ohne daß hierdurch eine Einschränkung erfolgen soll.

Nach Zugabe der Bariumsulfat-Partikel können aus diesen Formmassen lichtleitenden Schichten durch herkömmliche thermoplastische Formgebungsverfahren hergestellt werden. Hierzu gehören insbesondere die Extrusion sowie der Spritzguß.

Des weiteren können lichtleitende Schichten der vorliegenden Erfindung durch Gußverfahren hergestellt werden. Hierbei werden geeignete Acrylharzmischungen in einer Form gegeben und polymerisiert.
Ein geeignetes Acrylharz umfaßt beispielsweise
A) 0,001 - 0,08 Gew.-% sphärische Bariumsulfat-Partikel mit einem mittleren Durchmesser im Bereich von 0,7 bis 6 µm,
B) 40 - 99,999 Gew.-% Methylmethacrylat,
C) 0 - 59,999 Gew.-% Comonomere,
D) 0 - 59,999 Gew.-% in (B) oder (C) lösliche Polymere, wobei die Komponenten A) bis D) 100 Gew.-% ergeben.

Darüber hinaus weist das Acrylharz die zur Polymerisation notwendigen Initiatoren auf. Die Komponenten A bis D sowie die Initiatoren entsprechen den Verbindungen, die auch zur Herstellung geeigneter Polymethylmethacrylat Formmassen eingesetzt werden. Zur Aushärtung kann man z. B. das sogenannte Gusskammerverfahren (s. z. B. die DE 25 44 245, EP-B 570 782 oder EP-A 656 548) anwenden, bei die Polymerisation einer Kunststoffscheibe zwischen zwei Glasplatten erfolgt, die mit einer umlaufenden Schnur abgedichtet werden.

Gemäß einer besonderen Ausführungsform der vorliegenden Erfindung weist die lichtleitende Schicht mindestens 70, vorzugsweise mindestens 80 und besonders bevorzugt mindestens 90 Gew.-%, bezogen auf das Gewicht der lichtleitenden Schicht, Polymethylmethacrylat auf.

Die Poly(meth)acrylate der lichtleitenden Schicht weisen gemäß einem besonderen Aspekt der vorliegenden Erfindung einen Brechungsindex gemessen bei der Na-D-Linie (589 nm) und bei 20°C im Bereich von 1,48 bis 1,54 auf.

Die Formmassen sowie die Acrylharze können übliche Zusatzstoffe aller Art enthalten. Hierzu gehören unter anderem Antistatika, Antioxidantien, Entformungsmittel, Flammschutzmittel, Schmiermittel, Farbstoffe, Fließverbesserungsmittel, Füllstoffe, Lichtstabilisatoren und organische Phosphorverbindungen, wie Phosphite oder Phosphonate, Pigmente, Verwitterungsschutzmittel und Weichmacher. Die Menge an Zusatzstoffen ist jedoch auf den Anwendungszweck beschränkt. So sollte die lichtleitende Eigenschaft der Polymethylmethacrylat-Schicht nicht zu stark durch Additive beeinträchtigt werden.

Die lichtleitende Schicht weist im allgemeinen eine Transmission im Bereich von 80 bis 92 %, bevorzugt von 83 bis 92 auf, ohne daß hierdurch eine Beschränkung erfolgen soll. Die Transmission kann gemäß DIN 5036 bestimmt werden.

Die lichtleitende Schicht des Lichtleitkörpers weist erfindungsgemäß mindestens eine Dicke von 2 mm auf. Bevorzugt liegt die Dicke der lichtleitenden Schicht im Bereich von 2 bis 100 mm, besonders bevorzugt von 3 bis 20mm.

Die Lichtleitkörper der vorliegenden Erfindung weisen mindestens eine Lichteinleitungsfläche und mindestens eine Lichtaustrittsfläche auf.

Der Begriff Lichtaustrittsfläche kennzeichnet hierbei eine Fläche des Lichtleitkörper, die geeignet ist Licht abzustrahlen. Die Lichteinleitungsfläche wiederum ist in der Lage Licht in den Körper aufzunehmen, so daß die lichtleitende Schicht das eingeleitete Licht über die gesamte Lichtaustrittsfläche verteilen kann. Die lichtleitende Schicht weist eine Dicke von mindestens 2 mm auf. Die Bariumsulfat-Partikel führen zu einer Auskoppelung des Lichts, so daß Licht über die gesamte Lichtaustrittsfläche austritt.

Hierbei beträgt das Verhältnis von Lichtaustrittsfläche zu Lichteinleitungsfläche mindestens 4, vorzugsweise mindestens 20 und besonders bevorzugt mindestens 80.

Hieraus ergibt sich, daß der Lichtleitkörper der vorliegenden Erfindung sich in starkem Maß von bekannten Abdeckungen für Beleuchtungskörper unterscheidet. Diese Abdeckungen zeichnen sich dadurch aus, daß die Lichteinleitungsfläche parallel zur Lichtaustrittsfläche ausgebildet ist, so daß beide Flächen in etwa die gleiche Größe aufweisen.

Die Menge an ausgekoppeltem Licht ist von der Menge an Bariumsulfat-Partikel in der Kunststoffmatrix abhängig. Je größer diese Menge, desto größer ist die Wahrscheinlichkeit, daß Licht aus dem Lichtleiter ausgekoppelt wird. Hieraus ergibt sich, daß die Menge an Bariumsulfat von Größe der Lichtaustrittsfläche abhängig ist. Je weiter die Ausdehnung des Lichtleitkörpers senkrecht zur Lichteinleitungsfläche ist, desto geringer wird die Menge an BariumsulfatPartikeln in der lichtleitenden Schicht gewählt.

Gemäß einem bevorzugten Aspekt der vorliegenden Erfindung kann der Lichtleitkörper eine tafelförmige Gestalt annehmen, wobei die drei Ausdehnungen des Körpers eine unterschiedliche Größe aufweisen.

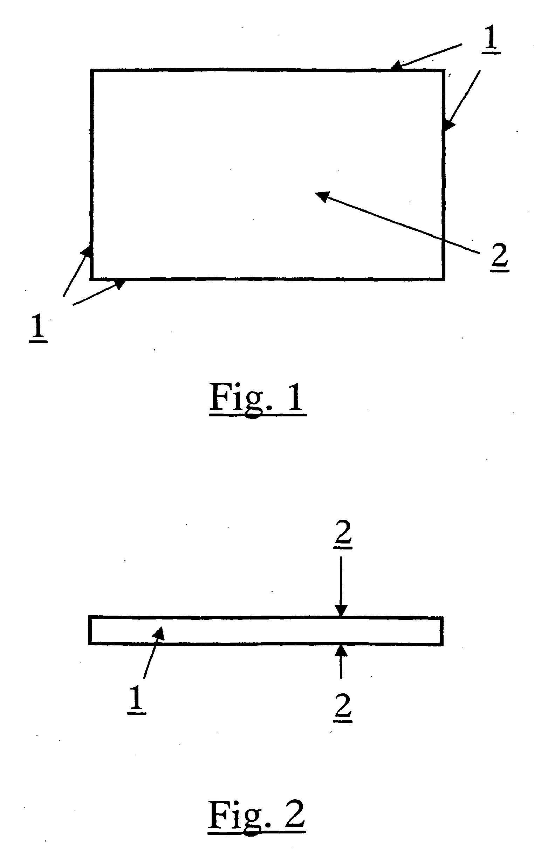

Eine derartige Tafel ist beispielsweise in den Figuren 1 und 2 schematisch dargestellt. Hierbei kennzeichnet das Bezugszeichen 1 die Kanten der Tafel, die jeweils als Lichteinleitungsflächen dienen können. Bezugszeichen 2 beschreibt die Lichtaustrittsfläche der Tafel.

Die kleinste Ausdehnung ist hierbei die Dicke der Tafel. Die größte Ausdehnung sei als Länge definiert, so daß die dritte Dimension die Breite darstellt. Hieraus ergibt sich, daß die Lichtaustrittsfläche dieser Ausführungsform durch Oberfläche definiert wird, die dem Produkt aus Länge*Breite entspricht. Die Kanten der Tafel, jeweils definiert als Oberfläche, die durch das Produkt aus Länge*Dicke oder Breite*Dicke gebildet wird, können im allgemeinen als Lichteintrittsfläche dienen. Vorzugsweise werden die als Lichteintrittsfläche dienenden Kanten poliert.

Bevorzugt weist ein derartiger Lichtleitkörper eine Länge im Bereich von 25 mm bis 3000 mm, vorzugsweise von 50 bis 2000 mm und besonders bevorzugt von 200 bis 2000 mm auf.

Die Breite dieser besonderen Ausführungsform liegt im allgemeinen im Bereich von 25 bis 3000 mm, vorzugsweise von 50 bis 2000 mm und besonders bevorzugt von 200 bis 2000 mm.

Ein derartiger Lichtleitkörper weist eine Dicke von mehr als 2 mm, vorzugsweise im Bereich von 3 bis 100 mm und besonders bevorzugt von 3 bis 20 auf. Neben dieser kubischen Ausführungen sind aber auch sich nach einer Seite hin verjüngende Ausführungen, die die Form eines Keils aufweisen, denkbar. Bei der Keilform wird nur über eine Lichteintrittssfläche Licht eingekoppelt.

Je nach Anordnung der Lichtquellen kann hierbei das Licht über alle vier Kanten eingestrahlt werden. Dies kann insbesondere bei sehr großen Lichtleitkörpern notwendig sein. Bei kleineren Lichtleitkörpern genügen im allgemeinen ein oder zwei Lichtquellen.

Gemäß einer bevorzugten Ausführungsform der vorliegenden Erfindung steht Lichtaustrittsfläche senkrecht zur Lichteinleitungsfläche.

Zur besseren Auswertung der eingesetzten Lichtenergie können die Kanten, die nicht mit einer Lichtquelle versehen sind, reflektierend ausgestattet werden. Diese Ausstattung kann beispielsweise durch reflektierende Klebebänder erfolgen. Des weiteren kann ein reflektierender Lack auf diese Kanten aufgebracht werden.

Gemäß einer besonderen Ausführungsform der vorliegenden Erfindung besteht der Lichtleitkörper aus der lichtleitenden Schicht, wobei die Kanten der lichtleitenden Schicht gegebenenfalls reflektierend ausgestattet werden können.

Der Lichtleitkörper sowie die lichtleitende Schicht weisen hervorragende mechanische und thermische Eigenschaften auf. Diese Eigenschaften umfassen insbesondere eine Vicat-Erweichungstemperatur nach ISO 306 (B50) von mindestens 95°C und ein E-Modul nach ISO 527-2 von mindestens 2000 MPa.

Der Lichtleitkörper der vorliegenden Erfindung kann insbesondere zur Beleuchtung von LCD-Displays, Hinweisschildern und Reklametafeln dienen.

Zur Beleuchtung der Lichteinleitungsfläche können alle bekannten Lichtquellen verwendet werden. Geeignet sind punktförmige Glühlampen, z. B. Niedervolt Halogenglühlampen, ein oder mehrere Enden von Lichtleitern, eine oder mehrere Leuchtdioden sowie röhrenförmige Halogenlampen und Leuchtstoffröhren. Diese können z. B. in einem Rahmen an einer Kante, bzw. einer Kantenfläche oder Stirnfläche, seitlich der indirekt auszuleuchtenden Fläche, des Lichtleitkörpers angeordnet sein.

Die Lichtquellen können zur besseren Bestrahlung des Lichtleitkörpers mit Reflektoren ausgestattet sein.

Nachfolgend wird die Erfindung durch Beispiele und Vergleichsbeispiele eingehender erläutert, ohne daß die Erfindung auf diese Beispiele beschränkt werden soll.

### Beispiel 1

### Herstellung einer Weißpaste:

In 94 Gew. Teilen Methylmethacrylat werden 5 Gew. Teile Polymethylmethacrylat mit einem n spez/C von 50-55 ccm/g gelöst. Zu dieser Lösung werden 1,0 Gew. Teile Blanc Fixe N gewaschen, der Fa. Sachtleben Chemie GmbH, D-47184 Duisburg, zugesetzt.
Diese Mischung wird an einem Rotor-Stator Dispergator (Ultra Turrax T 50 der Fa. Janke und Kunkel, Freiburg) mit ca.
700 U/Min. bis zu einer Temperatur von 55°C dispergiert und danach auf Raumtemperatur abkühlen gelassen.

### B) Herstellung eines Polymerisationsansatzes:

1,8 Gew.-% Weißpaste wird zu 98,2 Gew.-% MMA/PMMA Sirup mit ca 25% PMMA Anteil (n Spez/C von 75) zugegeben. Zu diesem Ansatz werden 0,075% 2,2-Azobis-(isobutyronitril) und 0,015% 2,2-Azobis-(2,4-dimethylvaleronitril) zugesetzt. Der Gesamtansatz wird an einem Flügelrührer ca. 30 Min. gerührt. Anschließend werden die eingerührten Luftbläschen durch Anlegen eines Unterdruckes aus dem Ansatz entfernt.

### C) Herstellung einer PMMA Platte mit Zusatz von Blan Fixe N gewaschen:

Aus 2 Silikatglasscheiben (Dicke 6mm) wird mit einer PVC Schnur (Durchmesser 9,6 mm) eine Kammer gebaut.
Wobei die beiden Silikatglasscheiben und die PVC
Schnur mit Klammern zusammengehalten werden.
In den Zwischenraum der Silikatglaskammer wird der unter B) beschriebene Polymerisationsansatz gefüllt und die Kammer verschlossen.
Die gefüllte Kammer wird in ein Wasserbad mit einer Temperatur von 40 bis 50 °C eingelegt und innerhalb von ca. 10 Stunden ausgehärtet, wobei die PVC Schnur in der Endphase der Aushärtung entfernt wurde.
Danach wird die Endpolymerisation in einem Temperschrank bei einer Temperatur von 115°C innerhalb von 3 Stunden durchgeführt. Danach wird bei Zimmertemperatur die Entformung vorgenommen und der Plattengießling mit einer Dicke von 8mm entnommen.

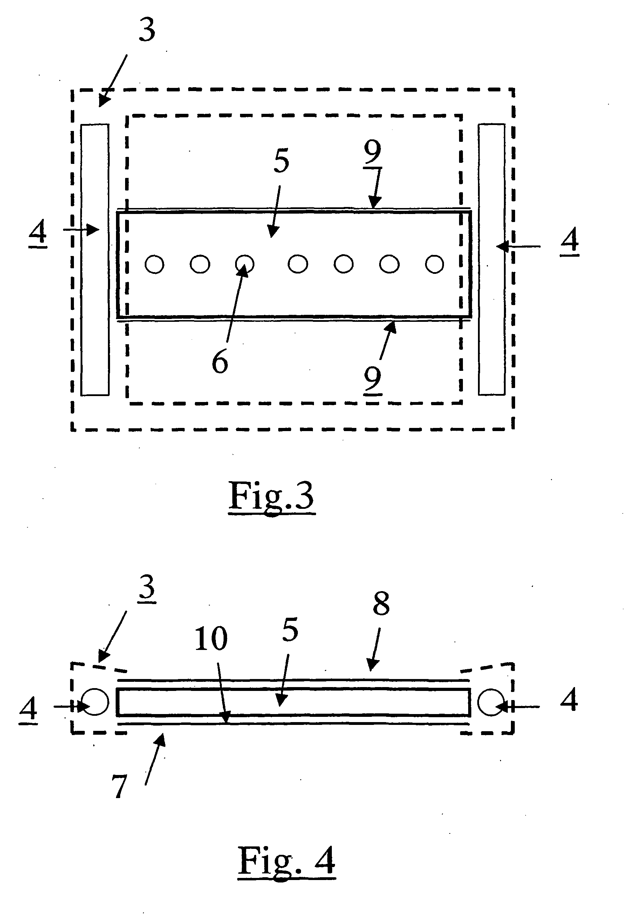

Aus der Platte wurde ein Plattenstreifen von 595 mm Länge, 84 mm Breite und 8 mm Dicke zugeschnitten. Der Plattenstreifen wurde an den vier Kanten hochglanzpoliert. Die beiden polierten 595 mm langen Kanten wurden mit einem reflektierenden Klebeband (9) des Herstellers 3M (Typ: Scotch Brand 850) versehen, so daß Lichtstrahlen, die auf diese Kanten auftreffen in die Platte reflektiert werden.
Die Plattenstreifen (5) wurden in einer speziellen Messapparatur vermessen, die in den Figuren 3 und 4 dargestellt ist. Die Messapparatur besteht aus einem rechteckigen Aluminiumrahmen von 708 mm Länge und 535 mm Breite (3). An jeweils der Kante des Aluminiumrahmens, der die Breite von 535 mm aufweist, sind jeweils zwei parallel zueinander angeordnete Leuchtstoffröhren (4) des Typs PHILIPS TLD 15W/4 angebracht. Der Abstand der Leuchtstoffröhren beträgt 599 mm und ist damit so bemessen, daß die Plattenstreifen mittig zwischen die Leuchtstoffröhren eingelegt werden kann und daß das von den Leuchtstoffröhren ausgestrahlte Licht in die 84 mm breite Kante der Plattenstreifen einstrahlt. Unterhalb der Plattenstreifen (5) ist eine Platte (7) mit einer weißen reflektierenden Oberfläche (10) angebracht. Die weiße Oberfläche soll Licht, das auf der dem Beobachter entgegengesetzten Oberfläche des Plattenstreifens (5) austritt, zum Beobachter hin reflektieren. Oberhalb der Plattenstreifen (5), dem Beobachter zugewandt, ist der Plattenstreifen mit einer Diffusorfolie (8) von 0,5 mm Dicke versehen, die das Licht, das aus dem Plattenstreifen die in Richtung des Beobachters austritt, homogenisiert. Auf der Diffusorfolie sind 7 Meßpunkte (6) markiert, an denen die Leuchtdichte mit einem Leuchtdichtemesser Typ MINOLTA LUMINANCE METER 1° gemessen wird. Die Messpunkte haben folgende Abstände von einer der 84 mm langen Kante des Plattenstreifen: 74 mm; 149 mm; 223 mm; 298 mm; 372 mm; 446 mm; 521 mm. Folgende Leuchtdichten wurden gemessen.

**Tabelle 1**

| Abstand von Plattenkante [mm] | Leuchtdichte (Plattenstreifen mit 0,018% Bariumsulfat) [cd/m²] |
|---|---|
| 74 | 111 |
| 149 | 96 |
| 223 | 86 |
| 298 | 83 |
| 372 | 88 |
| 446 | 99 |
| 521 | 111 |

Bezüglich der oben beschriebenen Ausführungsform wird auf die schematischen Darstellungen in Fig. 3 und Fig. 4 verwiesen.

## Patentansprüche

1. Lichtleitkörper, der mindestens eine Lichteinleitungsfläche und mindestens eine Lichtaustrittsfläche aufweist, wobei das Verhältnis von Lichtaustrittsfläche zu Lichteinleitungsfläche mindestens 4 beträgt, umfassend mindestens eine lichtleitende Schicht einer Dicke von mindestens 2 mm, **dadurch gekennzeichnet, daß** die lichtleitende Schicht mindestens 60 Gew.-%, bezogen auf das Gewicht der lichtleitenden Schicht, Polymethylmethacrylat und 0,001 bis 0,08 Gew.-%, bezogen auf das Gewicht der lichtleitenden Schicht, sphärische Bariumsulfat-Partikel mit einem mittleren Durchmesser im Bereich von 0,3 bis 20 µm umfaßt.

2. Lichtleitkörper gemäß Anspruch 1, **dadurch gekennzeichnet, daß** das Verhältnis von Lichtaustrittsfläche zur Lichteinleitungsfläche mindestens 20 beträgt.

3. Lichtleitkörper gemäß Anspruch 1 oder 2, **dadurch gekennzeichnet, daß** die Dicke der lichtleitenden Schicht im Bereich von 3 bis 100 mm liegt.

4. Lichtleitkörper gemäß einem oder mehreren der vorhergehenden Ansprüchen, **dadurch gekennzeichnet, daß** der Lichtleitkörper mindestens 90 Gew.-%, bezogen auf das Gewicht des Lichtleitkörpers, Polymethylmethacrylat umfaßt.

5. Lichtleitkörper gemäß einem oder mehreren der vorhergehenden Ansprüchen, **dadurch gekennzeichnet, daß** die Bariumsulfat-Partikel einen mittleren Durchmesser im Bereich von 1,4 bis 3,5 µm aufweisen.

6. Lichtleitkörper gemäß einem oder mehreren der vorhergehenden Ansprüchen, **dadurch gekennzeichnet, daß** die lichtleitende Schicht 0,001 bis 0,04 Gew.-%, bezogen auf das Gewicht der lichtleitenden Schicht, sphärische Bariumsulfat-Partikel aufweist.

7. Lichtleitkörper gemäß einem oder mehreren der vorhergehenden Ansprüchen, **dadurch gekennzeichnet, daß** das Polymethylmethacrylat der lichtleitenden Schicht einen Brechungsindex gemessen,bei der Na-D-Linie (589 nm) und bei 20°C im Bereich von 1,48 bis 1,54 aufweist.

8. Lichtleitkörper gemäß einem oder mehreren der vorhergehenden Ansprüchen, **dadurch gekennzeichnet, daß** die lichtleitende Schicht eine Transmission gemäß DIN 5036 im Bereich von 75 bis 92 % aufweist.

9. Lichtleitkörper gemäß einem oder mehreren der vorhergehenden Ansprüchen, **dadurch gekennzeichnet, daß** die Lichtaustrittsfläche senkrecht zur Lichteinleitungsfläche steht.

10. Lichtleitkörper gemäß einem oder mehreren der vorhergehenden Ansprüchen, **dadurch gekennzeichnet, daß** mindestens eine Fläche, die parallel zur Lichteinleitungsfläche steht, reflektierend ausgestattet ist.

11. Verfahren zur Herstellung eines Lichtleitkörpers gemäß den Ansprüchen 1 bis 10, **dadurch gekennzeichnet, daß** man eine Formmasse aufweisend mindestens 60 Gew.-%, bezogen auf das Gewicht der Formmasse, Polymethylmethacrylat und 0,001 bis 0,08 Gew.-%, bezogen auf das Gewicht der Formmasse, sphärische Bariumsulfat-Partikel mit einem mittleren Durchmesser im Bereich von 0,7 bis 6 µm thermoplastisch formt.

12. Verfahren zur Herstellung eines Lichtleitkörpers gemäß den Ansprüchen 1 bis 10, **dadurch gekennzeichnet, daß** man ein Acrylharz aufweisend
A) 0,001 - 0,08 Gew.-% sphärische Bariumsulfat-Partikel mit einem mittleren Durchmesser im Bereich von 0,7 bis 6 µm,
B) 40 - 99,999 Gew.-% Methylmethacrylat,
C) 0 - 59,999 Gew.-% Comonomere,
D) 0 - 59,999 Gew.-% in (B) oder (C) lösliche Polymere,
wobei die Komponenten A) bis D) 100 Gew.-% ergeben, radikalisch polymerisiert.

13. Vorrichtung zum indirekten Ausleuchten aufweisend mindestens ein Lichtleitkörper gemäß den Ansprüchen 1 bis 10 und eine Lichtquelle, die die Lichteinleitungsfläche des Lichtleitkörper bestrahlen kann.

## Claims

1. Light-guide body, which has at least one light-entry surface and at least one light-exit surface, the ratio of the light-exit surface area to the light-entry surface area being at least 4, comprising at least one light-guiding layer with a thickness of at least 2 mm, **characterized in that** the light-guiding layer comprises at least 60% by weight, expressed in terms of the weight of the light-guiding layer, of polymethyl methacrylate and from 0.001 to 0.08% by weight, expressed in terms of the weight of the light-guiding layer, of spherical barium sulphate particles with an average diameter in the range of from 0.3 to 20 µm.

2. Light-guide body according to Claim 1, **characterized in that** the ratio of the light-exit surface area to the light-entry surface area is at least 20.

3. Light-guide body according to Claim 1 or 2, **characterized in that** the thickness of the light-guiding layer is in the range of from 3 to 100 mm.

4. Light-guide body according to one or more of the preceding claims, **characterized in that** the light-guide body comprises at least 90% by weight, expressed in terms of the weight of the light-guide body, of polymethyl methacrylate.

5. Light-guide body according to one or more of the preceding claims, **characterized in that** the barium sulphate particles have an average diameter in the range of from 1.4 to 3.5 µm.

6. Light-guide body according to one or more of the preceding claims, **characterized in that** the light-guiding layer has from 0.001 to 0.04% by weight, expressed in terms of the weight of the light-guiding layer, of spherical barium sulphate particles.

7. Light-guide body according to one or more of the preceding claims, **characterized in that** the polymethyl methacrylate of the light-guiding layer has a refractive index, measured at the Na-D line (589 nm) and at 20°C, in the range of from 1.48 to 1.54.

8. Light-guide body according to one or more of the preceding claims, **characterized in that** the light-guiding layer has a transmission, according to DIN 5036, in the range of from 75 to 92%.

9. Light-guide body according to one or more of the preceding claims, **characterized in that** the light-exit surface is perpendicular to the light-entry surface.

10. Light-guide body according to one or more of the preceding claims, **characterized in that** at least one surface, which is parallel with the light-entry surface, is configured to be reflective.

11. Process for producing a light-guide body according to Claims 1 to 10, **characterized in that** a moulding material having at least 60% by weight, expressed in terms of the weight of the moulding material, of polymethyl methacrylate and from 0.001 to 0.08% by weight, expressed in terms of the weight of the moulding material, of spherical barium sulphate particles with an average diameter in the range of from 0.7 to 6 µm, is thermoplastically shaped.

12. Process for producing a light-guide body according to Claims 1 to 10, **characterized in that** an acrylic resin having
A) 0.001 - 0.08% by weight of spherical barium sulphate particles with an average diameter in the range of from 0.7 to 6 µm,
B) 40 - 99.999% by weight of methyl methacrylate,
C) 0 - 59.999% by weight of comonomers,
D) 0 - 59.999% by weight of polymers which are soluble in (B) or (C),
the components A) to D) adding up to 100% by weight, is radical-polymerized.

13. Device for indirect lighting, having at least one light-guide body according to Claims 1 to 10 and a light source, which can illuminate the light-entry surface of the light-guide body.

## Revendications

1. Corps de guidage de lumière, qui présente au moins une surface d'introduction de la lumière et au moins une surface de sortie de la lumière, dans lequel le rapport de la surface de sortie de la lumière à la surface d'introduction de la lumière est d'au moins 4, comprenant au moins une couche de guidage de lumière ayant une épaisseur d'au moins 2 mm, **caractérisé en ce que** la couche de guidage de lumière comprend, par rapport au poids de la couche de guidage de lumière, au moins 60 % en poids de poly(méthacrylate de méthyle) et 0,001 à 0,08 % en poids de particules sphériques de sulfate de baryum ayant un diamètre moyen dans la plage de 0,3 à 20 µm.

2. Corps de guidage de lumière selon la revendication 1, **caractérisé en ce que** le rapport de la surface de sortie de la lumière à la surface d'introduction de la lumière est d'au moins 20.

3. Corps de guidage de lumière selon la revendication 1 ou 2, **caractérisé en ce que** l'épaisseur de la couche de guidage de lumière se situe dans la plage de 3 à 100 mm.

4. Corps de guidage de lumière selon une ou plusieurs des revendications précédentes, **caractérisé en ce que** le corps de guidage de lumière comprend au moins 90 % en poids de poly(méthacrylate de méthyle) par rapport au poids du corps de guidage de lumière.

5. Corps de guidage de lumière selon une ou plusieurs des revendications précédentes, **caractérisé en ce que** les particules de sulfate de baryum présentent un diamètre moyen dans la plage de 1,4 à 3,5 µm.

6. Corps de guidage de lumière selon une ou plusieurs des revendications précédentes, **caractérisé en ce que** la couche de guidage de lumière présente 0,001 à 0,04 % en poids de particules sphériques de sulfate de baryum par rapport au poids de la couche de guidage de lumière.

7. Corps de guidage de lumière selon une ou plusieurs des revendications précédentes, **caractérisé en ce que** le poly(méthacrylate de méthyle) de la couche de guidage de lumière présente un indice de réfraction, mesuré sur la ligne Na-D (589 nm) à une température de 20 °C, dans la plage de 1,48 à 1,54.

8. Corps de guidage de lumière selon une ou plusieurs des revendications précédentes, **caractérisé en ce que** la couche de guidage de lumière présente une transmission selon la norme DIN 5036 dans la plage de 75 à 92 %.

9. Corps de guidage de lumière selon une ou plusieurs des revendications précédentes, **caractérisé en ce que** la surface de sortie de la lumière est perpendiculaire à la surface d'introduction de la lumière.

10. Corps de guidage de lumière selon une ou plusieurs des revendications précédentes, **caractérisé en ce qu'**au moins une surface, qui est parallèle à la surface d'introduction de la lumière, est réfléchissante.

11. Procédé de fabrication d'un corps de guidage de lumière selon les revendications 1 à 10, **caractérisé en ce que** l'on procède à une opération de formage thermoplastique d'une masse de moulage présentant, par rapport au poids de la masse de moulage, au moins 60 % en poids de poly(méthacrylate de méthyle) et 0,001 à 0,08 % en poids de particules sphériques de sulfate de baryum ayant un diamètre moyen dans la plage de 0,7 à 6 µm.

12. Procédé de fabrication d'un corps de guidage de lumière selon les revendications 1 à 10, **caractérisé en ce que** l'on polymérise par voie radicalaire une résine acrylique, présentant :
A) 0,001 à 0,08 % en poids de particules sphériques de sulfate de baryum ayant un diamètre moyen dans la plage de 0,7 à 6 µm,
B) 40 à 99,999 % en poids de méthacrylate de méthyle,
C) 0 à 59,999 % en poids de comonomères,
D) 0 à 59,999 % en poids de polymères solubles dans (B) ou (C),
la somme des composants A) à D) faisant 100 % en poids.

13. Dispositif pour l'éclairage indirect, présentant au moins un corps de guidage de lumière selon les revendications 1 à 10 et une source de lumière, qui peut exposer à la lumière la surface d'introduction de la lumière du corps de guidage de lumière.
